(19) Europäisches Patentamt
European Patent Office
Office européen des brevets

(11) **EP 2 554 939 B1**

(12) **FASCICULE DE BREVET EUROPEEN**

(45) Date de publication et mention
de la délivrance du brevet:
**18.06.2014 Bulletin 2014/25**

(51) Int Cl.:
*G02B 27/00* (2006.01)     *G01S 17/87* (2006.01)
*G01B 9/02* (2006.01)      *G01B 11/03* (2006.01)
*G01B 11/26* (2006.01)

(21) Numéro de dépôt: **12178975.4**

(22) Date de dépôt: **02.08.2012**

(54) **Systeme à détection de posture interférométrique**

Interferenzsystem für eine Stellungserkennung

Interferometric posture detection system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.08.2011 FR 1102461**

(43) Date de publication de la demande:
**06.02.2013 Bulletin 2013/06**

(73) Titulaire: **Thales**
**92200 Neuilly Sur Seine (FR)**

(72) Inventeurs:
• **Potin, Laurent**
**33230 COUTRAS (FR)**
• **Barbier, Bruno**
**33000 BORDEAUX (FR)**
• **Rouzes, Siegfried**
**33185 LE HAILLAN (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
WO-A1-03/064968     JP-A- 2000 111 325
US-A- 3 085 466      US-A- 4 884 889

## Description

Le domaine de l'invention est celui des systèmes à détection de position et/ou d'orientation encore appelée détection de posture. Un des domaines d'application est la détection de posture de casque de pilote d'aéronef. Cette fonction permet d'asservir, entre autre, une image projetée dans le visuel de casque sur le paysage extérieur.

De nombreux dispositifs existent mettant en oeuvre différentes technologies. On citera les détections utilisant des principes électromagnétiques ou optiques. On citera également les systèmes mettant en oeuvre des capteurs inertiels.

Cependant, pour certaines applications, le système doit posséder une grande précision de mesure, inférieure au milliradian. Or, pour la grande majorité des systèmes de détection actuels, cette barrière du milliradian de précision reste très difficilement franchissable.

Le système de détection selon l'invention permet de réaliser des mesures relatives d'écart angulaire avec une précision proche du microradian, mille fois supérieure aux précisions actuelles.

Le principe général de l'invention repose sur un système optique émetteur-récepteur constitué d'une source cohérente éclairant une cible, en l'occurrence un casque de pilote. La cible scinde, à l'aide de deux rétro-réflecteurs, le faisceau incident en deux faisceaux déphasés l'un par rapport à l'autre en fonction de l'angle de rotation de la cible par rapport au repère de l'émetteur. L'émetteur-récepteur fait interférer les deux faisceaux, le nombre de franges défilantes déterminant la valeur de rotation entre deux orientations du casque. La mesure est donc une mesure angulaire différentielle.

Les rétro-réflecteurs sont des coins de cube. Un coin ce cube permet de rétro-réfléchir un front d'onde vers sa source, quelle que soit l'orientation du coin de cube. Si deux coins de cube sont portés par le casque, le premier front d'onde issu du premier coin de cube présente un retard de phase par rapport au second front issu de second coin de cube, ce retard est dépendant de l'orientation des coins de cube par rapport au front d'onde incident.

L'interfrange qui constitue le plus petit quantum mesurable n'est dépendant que de la longueur d'onde et de la géométrie de construction des coins de cube lorsque la source est à l'infini. Il correspond à un déplacement angulaire extrêmement faible des coins de cube. On peut ainsi obtenir des mesures extrêmement précises, sans moyens optiques conséquents.

JP 2000-111325 divulgue un système de détection d'au moins un angle de rotation d'un objet, lequel n'est pas un casque de pilote.

Plus précisément, l'invention a pour objet un système de détection d'au moins une rotation d'un casque de pilote dans l'espace comprenant au moins :

- un dispositif fixe électro-optique et d'orientation connue comprenant :

    o une première source d'émission ponctuelle collimatée par un objectif optique ;
    o un élément optique semi-réfléchissant et ;
    o un premier ensemble de détection photosensible, la première source d'émission et le premier ensemble de détection étant symétriques par rapport à l'élément optique semi-réfléchissant ;

- un ensemble comprenant deux dispositifs rétroréfléchissants appelés « coin de cube » disposés sur le casque de pilote ;

caractérisé en ce que :

- la première source ponctuelle est une source de lumière cohérente émettant à une première longueur d'onde ;
- les deux coins de cube forment un interféromètre, c'est-à-dire qu'une première partie de la lumière issue de la source collimatée, rétro-réfléchie par le premier coin de cube et focalisée par l'objectif optique interfère sur le premier ensemble de détection photosensible avec une seconde partie de la lumière issue de la source collimatée, rétro-réfléchie par le second coin de cube et focalisée par l'objectif optique, le signal reçu par le premier ensemble de détection photosensible dépendant de l'orientation de l'axe joignant les deux centres des deux coins de cube ;
- le système étant configuré pour déterminer ledit angle de rotation au moyen dudit signal d'interférence.

Avantageusement, le système comprend :

- des premiers moyens optiques de dédoublement d'images disposés de façon à créer à travers l'élément optique semi-réfléchissant une première image et une seconde image de la première source d'émission ponctuelle et ;
- un second ensemble de détection,

l'agencement des différents éléments optiques étant tel que la première image de la première source se forme sur le premier ensemble de détection photosensible et la seconde image de la première source se forme sur le second ensemble de détection photosensible, permettant ainsi de déterminer les variations d'orientation de l'axe joignant les centres du premier coin de cube et du second coin de cube par la mesure des deux signaux issus des deux ensembles de détection.

Avantageusement, le système comprend :

- Un troisième coin de cube disposé sur l'objet mobile ;
- une seconde source d'émission ponctuelle cohérente émettant à une seconde longueur d'onde différente de la première longueur d'onde ;

- des seconds moyens optiques de dédoublement d'images disposés de façon à créer à travers l'élément optique semi-réfléchissant une première image et une deuxième image de la seconde source d'émission ponctuelle et ;
- un troisième ensemble de détection photosensible et un quatrième ensemble de détection photosensible ponctuel,

l'agencement des différents éléments optiques étant tel que la première image de la seconde source se forme sur le troisième ensemble de détection photosensible et la deuxième image de la seconde source se forme sur le quatrième ensemble de détection photosensible, permettant ainsi de déterminer :

- les variations d'orientation par rapport à deux axes connus du premier axe joignant les centres du premier coin de cube et du second coin de cube par la mesure des deux signaux issus des deux premiers détecteurs et ;
- les variations d'orientation par rapport à deux axes connus du second axe joignant les centres du premier coin de cube et du troisième coin de cube par la mesure des deux signaux issus du troisième et du quatrième détecteur.

Avantageusement, les moyens optiques de dédoublement d'images sont constitués de deux lames planes semi-réfléchissantes ayant un côté commun et dont les normales font un angle prédéterminé différent de zéro.

Avantageusement, au moins un des ensembles de détection photosensible comporte un unique détecteur ponctuel.

Avantageusement, au moins un des ensembles de détection photosensible comporte deux détecteurs ponctuels séparés par un élément optique séparateur de polarisation, au moins un des coins de cube comportant un polariseur linéaire, le dispositif fixe ou ledit coin de cube comprenant une lame quart d'onde, permettant ainsi de déterminer le sens de variation de l'orientation d'un axe joignant les centres du premier coin de cube et du second coin de cube par la mesure des deux signaux issus des deux détecteurs ponctuels.

Avantageusement, le système de détection comporte des moyens mécaniques ou opto-mécaniques permettant d'orienter les faisceaux collimatés émis par la ou les sources ponctuelles d'un angle prédéterminé.

Avantageusement, le système de détection comporte des moyens optiques permettant de déterminer une orientation initiale des coins de cube, lesdits moyens comportant au moins une source de lumière collimatée dite source d'initialisation et une matrice de photodétection ;

l'objet mobile comportant deux miroirs plans disposés dans des plans différents et de position connue par rapport à l'objet mobile.

Préférentiellement, la source d'initialisation est la première source d'émission ponctuelle collimatée et en ce que les miroirs plans sont deux faces d'entrée des coins de cube.

L'invention sera mieux comprise et d'autres avantages apparaîtront à la lecture de la description qui va suivre donnée à titre non limitatif et grâce aux figures annexées parmi desquelles :

La figure 1 représente le principe de fonctionnement d'un coin de cube ;
La figure 2 représente le principe de fonctionnement d'un interféromètre à deux coins de cube ;
Les figures 3 et 4 représentent la relation liant l'interfrange du système d'interférence, la distance des sommets des coins de cube et leur orientation ;
La figure 5 représente le principe général du système de détection selon l'invention ;
Les figures 6, 7 et 8 représentent une première variante du système selon l'invention permettant de mesurer le sens des déplacements des franges d'interférence ;
Les figures 9, 10 et 11 exposent les principes géométriques généraux permettant de déterminer les configurations optimales des sources d'émission permettant de mesurer les variations d'orientation selon un axe ou selon deux axes d'orientation ;
La figure 12 représente une première configuration du système « à deux coins de cube » selon l'invention permettant de réaliser une mesure de variation d'orientation d'un axe ;
La figure 13 représente une seconde configuration du système « à trois coins de cube » selon l'invention permettant de réaliser une mesure de variation d'orientation de deux axes ;
Les figures 14 et 16 représentent le principe d'un dispositif optique d'initialisation ;
La figure 15 représente l'implantation sur le casque des coins de cube dans le cadre d'un dispositif optique d'initialisation ;
Les figures 17 et 18 représentent l'implantation d'un dispositif optique d'initialisation dans le système optique selon l'invention.

Pour la clarté de l'exposé, la description ci-dessous est organisée en plusieurs parties. La première partie expose les principes généraux de l'interférométrie à coins de cube, la seconde partie décrit les moyens permettant de déterminer le sens de variation de l'orientation d'un axe, la troisième partie décrit de façon générale les systèmes de détection selon l'invention selon que l'on mesure l'orientation d'un axe ou de deux axes. La quatrième partie traite du problème de l'initialisation du système et des moyens de la réaliser. Enfin, une dernière partie fait le bilan des avantages du système selon l'invention par rapport aux systèmes optiques de l'art antérieur.

**Principes généraux**

On appelle catadioptre tout réflecteur ou rétro-réflecteur optique ayant la propriété de réfléchir un pinceau de lumière dans la même direction que sa direction incidente. Il existe divers moyens optiques de réaliser cette fonction. On s'intéresse plus particulièrement aux catadioptres en « coin de cube » dans la suite de la description dans la mesure où ils sont simples à réaliser et d'une grande précision.

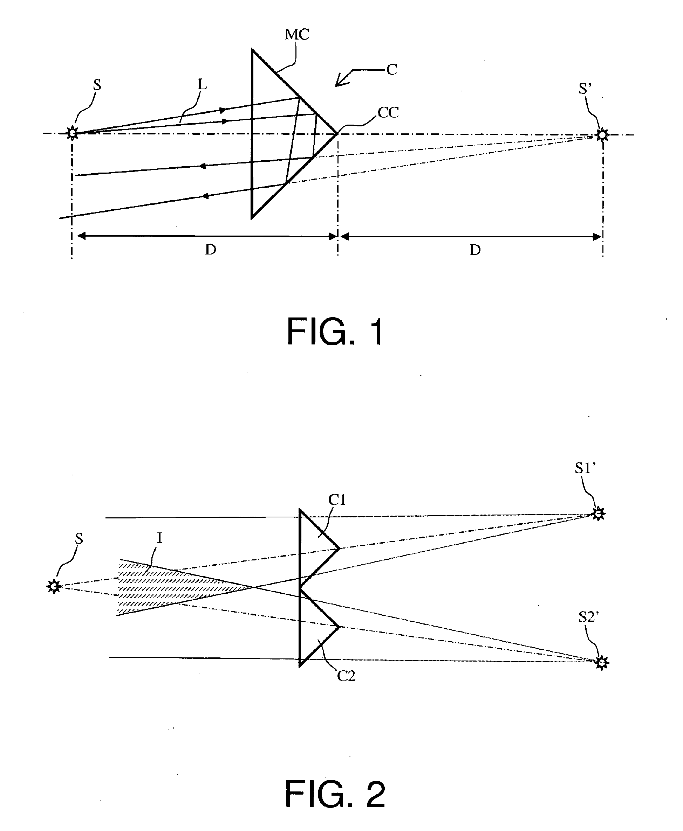

Un « coin de cube » C tel que représenté en figure 1 est constitué de trois miroirs plans MC orthogonaux entre eux. Pour des raisons de clarté, le plan de la figure 1 est tel que seuls deux des trois miroirs sont représentés. La propagation des rayons lumineux se fait dans le plan de la figure. Dans ce plan, les rayons lumineux ne subissent que deux réflexions sur les miroirs MC. Ainsi, un pinceau de lumière émis par une partie émettrice S et éclairant le catadioptre C est réémis dans la même direction vers une partie réceptrice située sur le même axe que la source S avec un rendement excellent. On démontre facilement que l'image de la source S est une source S' située sur un axe SC passant par la source S et le centre CC du coin de cube et à égale distance D de celui-ci. De la même façon, tout faisceau lumineux qui n'est pas issu de la source et qui frappe le catadioptre, ne produit, par principe, quasiment aucun éclairement vers la partie réceptrice.

Lorsqu'on réalise un ensemble comprenant deux coins de cube C1 et C2 comme représentés en figure 2, l'utilisation d'une source cohérente S permet de générer des figures d'interférence I entre les images S1' et S2' ainsi générées par les coins de cube C1 et C2, dans la zone de recouvrement des faisceaux issus des images S1' et S2' et en s'appuyant sur la pupille générée par chaque coin de cube C1 et C2.

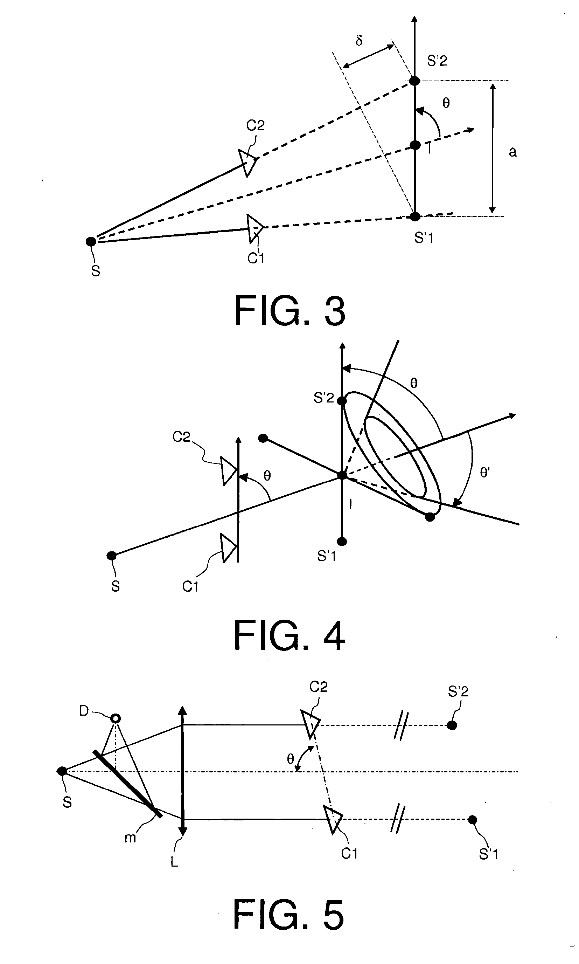

Comme indiqué sur la figure 3, lorsque l'axe joignant les sommets des coins de cube tourne d'un angle $\theta$, l'axe joignant les deux images S1' et S2' tourne du même angle $\theta$, ce déplacement des images de la source S induit une différence de marche $\delta$ entre les deux faisceaux issus des images virtuelles S1' et S2'. Cette différence de marche $\delta$ vaut a.cos($\theta$), a représentant la distance entre les deux images S1' et S2',
soit encore a= 2.C1 C2.

Ainsi, quand l'angle de rotation passe de $\theta$ à $\theta$', la variation de différence de marche $\Delta\delta$ vaut :

$$\Delta\delta = a.\big(\cos(\theta) - \cos(\theta')\big)$$

Les lieux de même différence de marche, pour une position fixe du milieu de C1 C2 sont donc des cônes d'angle au sommet $\theta$ comme indiqué sur la figure 4.

On sait que la différence de marche $\Delta\delta$ correspondant à une frange d'interférence est égale à $\lambda$, longueur d'onde moyenne de la source S d'émission. Ainsi, pour passer d'une frange à une autre, il suffit que l'écart angulaire entre les angles $\theta$ et $\theta$' vérifie :

$$\cos(\theta) - \cos(\theta') = \frac{\lambda}{a}$$

C'est-à-dire un écart extrêmement faible. Par conséquent, il est possible de réaliser des mesures de variations d'orientation avec une très grande sensibilité.

D'un point de vue pratique, le système de détection selon l'invention doit au moins comprendre, comme indiqué sur la figure 5, une source S de longueur d'onde $\lambda$ ponctuelle et de cohérence temporelle suffisante pour créer des franges d'interférence. Cette source S de position connue et collimatée par la lentille L illumine au moins deux coins de cube C1 et C2 montés sur un objet mobile non représenté sur la figure 5. Comme il a été dit, dans la grande majorité des applications, l'objet mobile est un casque disposé dans un cockpit d'aéronef.

Un photodétecteur D placé de manière symétrique à la source S par rapport à une lame semi réfléchissante m voit défiler les franges issues des interférences générées par les deux images S1' et S2' à l'infini issues de la même source. La différence de marche générant ces franges ne dépend que de l'inclinaison $\theta$, par rapport à l'axe du collimateur, de l'axe joignant les deux coins de cube C1 et C2.

Ce système simple de la figure 5 permet de réaliser une mesure relative du déplacement angulaire de l'axe joignant les coins de cube dans une direction donnée. Il suffit de compter le nombre de franges entre deux intervalles de temps, offrant ainsi une mesure précise entre une orientation origine et une orientation finale, sans qu'une calibration soit nécessaire. La source S étant collimatée, le système n'est sensible qu'à la rotation et totalement insensible aux translations de l'objet mobile.

La couverture spatiale du dispositif est déterminée par la zone couverte par l'émetteur. On peut donc utiliser ce dispositif dans plusieurs modes d'utilisation différents.

Dans un premier mode de réalisation, on peut utiliser le système selon l'invention comme système à haute précision différentielle et à faible débattement en translation. Il permet une détection de variation d'orientation dans un volume de détection réduit avec une optique d'émission-réception fixe. De manière plus opérationnelle, le système mesure alors principalement des petits débattements de manière très précise en fournissant une précision inégalée. Il est possible ainsi de mesurer un écart angulaire précis entre deux cibles ou deux caps, désignés visuellement par le porteur du casque. Outre une précision importante, ce système permet de corriger la latence d'une détection de posture classique effectuant des mesures fixes à intervalles réguliers et donc en retard de manière significative à partir d'une certaine vitesse angulaire. Le dispositif selon l'invention permet de s'affranchir de la vitesse, car il fournit l'espacement temporel entre deux quanta angulaires.

Dans un second mode de réalisation, le système comporte un dispositif d'alignement initial. Actuellement, sur aéronefs, la haute précision de la conformité des symboles par rapport au paysage extérieur n'est pas réalisée par des dispositifs montés sur casque mais est obtenue par un dispositif dit « Tête Haute » ou « HUD » pour « Head-Up Display » qui superpose des images synthétiques sur le paysage extérieur. Le HUD est positionné de manière fixe et précise dans le cockpit. Il affiche des symboles critiques comme l'axe de piste, le vecteur vitesse ou le réticule de tir.

La grande précision du système selon l'invention peut remédier à ce problème inhérent à l'emploi des visuels de casque et contribuer à supprimer le HUD du cockpit. Dans ce cas, bien entendu, le système selon l'invention nécessite un dispositif d'initialisation qui va permettre de « caler » le système sur une référence d'orientation parfaitement définie. Il existe différentes techniques permettant de réaliser cette initialisation. On peut, bien entendu, mettre en place des moyens optiques permettant de réaliser cette fonction. De tels moyens sont décrits dans ce qui suit. On réalise ainsi un système tout optique.

On peut alors associer le système de détection selon l'invention avec une détection de posture classique. Le système selon l'invention couvre un champ réduit avec une très grande précision et la détection de posture classique couvre un champ plus large avec une précision moins importante.

Dans un troisième mode de réalisation, pour obtenir des débattements en translation plus importants, le système inclut un miroir monté sur une plate forme pivotante deux-axes et un dispositif d'asservissement de ce miroir. Le ou les faisceaux incidents issus de la source émettrice ou des sources émettrices s'orientent de manière automatique vers les coins de cube montés sur l'objet mobile de manière à constamment les illuminer. Le système d'asservissement est composé d'une source incohérente secondaire imagée sur le miroir pivotant par une optique ad hoc. Son image par les coins de cube fournit deux images de retour qui se déplacent avec la translation des coins de cube. Un simple détecteur 4-quadrants barycentrique corrige en rotation le miroir pivotant de manière à équilibrer la répartition des flux détectés sur les quatre quadrants de manière à recentrer les faisceaux issus des sources. Il est à noter que, quelle que soit l'orientation donnée par le miroir pivotant, le système à coins de cubes renvoie les faisceaux rétro-réfléchis dans la direction du faisceau incident, l'imprécision du système pivotant n'intervient pas dans la précision globale du système de détection.

Ce dernier système à miroir pivotant peut être associé comme dans les modes de réalisation précédents à un dispositif d'initialisation.

**Détection du sens de variation de l'orientation**

Le signal issu du détecteur est un signal sinusoïdal. Il varie de la même façon que les franges défilent dans un sens ou dans le sens opposé. Il est nécessaire de lever cette ambiguïté sur le sens de défilement des franges. La façon la plus simple consiste à réaliser un double train de franges ou « franges imbriquées ». Cette méthode est utilisée en interférométrie pour déterminer le sens des déplacements d'un bras de l'interféromètre.

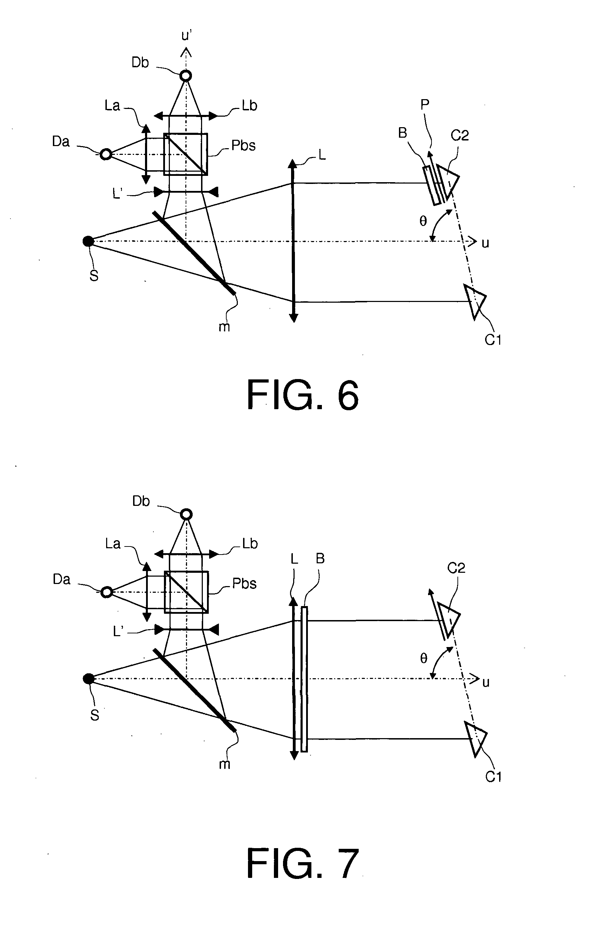

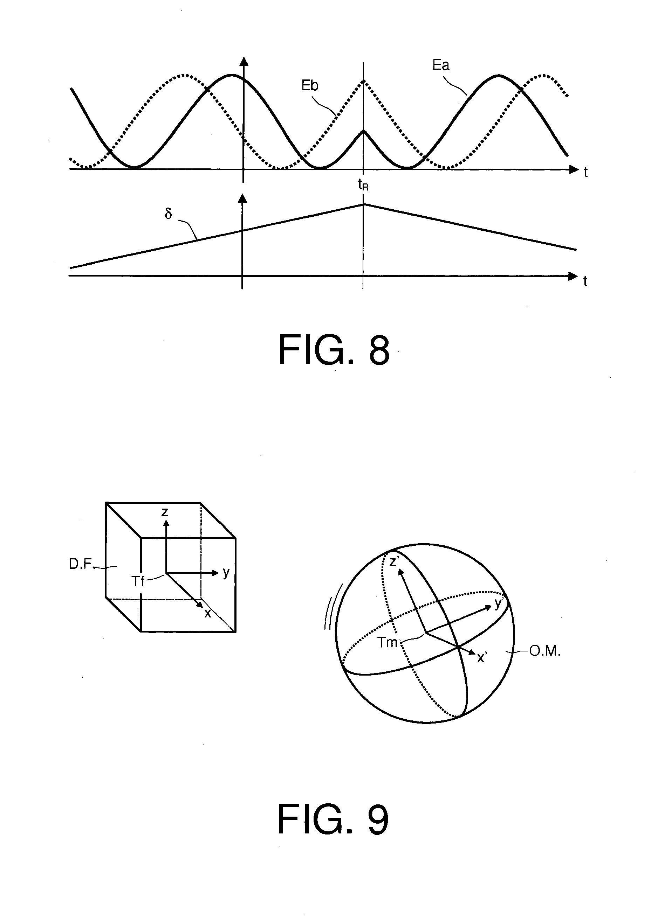

Les figures 6 et 7 représentent l'implantation optique de cette méthode dans un système selon l'invention. La figure 8 représente les signaux issus des deux détecteurs Da et Db représentés sur les figures 6 et 7.

Sur la figure 6, le rayonnement non polarisé de la source laser S collimaté selon un axe u est, après réflexion sur un des deux réflecteurs, par exemple C2, polarisé circulairement par une lame biréfringente B quart d'onde qui est fixée devant C2 et un polariseur linéaire P qui est interposé entre C2 et la lame B. Ce polariseur est orienté à 45° des lignes neutres de la lame B, celles-ci étant perpendiculaires entre elles. Tant que l'incidence θ sur la lame B reste faible, la polarisation résultante en sortie de B est circulaire. Pour les grandes valeurs de l'incidence θ, la polarisation résultante est elliptique. On doit, bien entendu, choisir le traitement réfléchissant des faces des coins de cube de façon qu'ils conservent la polarisation des rayonnements lumineux incidents.

Aux faibles incidences, la polarisation issue de C2 est décomposable en deux polarisations linéaires selon deux axes perpendiculaires, de directions quelconques dans le plan perpendiculaire à la direction du rayonnement. Ces deux polarisations sont déphasées entre elles de $+\pi/2$.

La détection des maxima d'intensité résultant de l'interférence de du faisceau de lumière polarisée issu de C2 avec le faisceau dépolarisé réfléchi par C1 se fait au moyen:

- d'un cube séparateur de polarisation Pbs éclairé en rayonnement collimaté grâce à l'optique divergente L',
- de deux détecteurs ponctuels Da et Db associés respectivement aux lentilles de focalisation La et Lb disposées en sortie du cube séparateur.

Une variante au dispositif de la figure 6 est représenté en figure 7. Cette variante de réalisation consiste à placer une lame biréfringente B de plus grande taille devant le collimateur L, perpendiculairement à l'axe u, de façon à utiliser cette lame sous incidence nulle, le polariseur linéaire P travaillant lui toujours sous incidence variable.

Puisque la polarisation issue de C2 est circulaire et que le rayonnement issu de C1 est dépolarisé, l'orientation du cube Pbs autour de la direction u' du rayonnement, prolongement de l'axe u par le miroir de renvoi m est quelconque par rapport à celle du polariseur P dans le plan de la face d'entrée de la lame B.

Le déphasage constant entre les deux polarisations se traduit par un déphasage entre les courbes d'éclairement sur les détecteurs en fonction de l'angle θ. Ce déphasage vaut +π/2 pour un sens de variation de θ et -π/2 pour le sens de variation opposé. La figure 8 donne l'allure des deux éclairements Ea et Eb obtenus sur les deux détecteurs Da et Db en fonction du temps t produite par une variation de la différence de marche δ. donc de cosθ. linéaire en fonction du temps, avec un changement de sens qui correspond aux points anguleux des trois courbes à l'instant $t_R$.

Le nombre n de franges entre deux orientations de l'axe C1 C2 est obtenu par comptages et décomptages successifs des maximums selon le signe du retard entre les signaux produits par Da et par Db. Pour les grandes valeurs de l'incidence θ sur le polariseur P et sur la lame biréfringente B, la polarisation elliptique produite par la lame B conduit aux phénomènes suivants :

- un déséquilibre entre les intensités transmises par les deux voies de l'analyseur Pbs pour le rayonnement issu de C2 à travers B, ce qui se traduit par une baisse du contraste des franges sur chaque détecteur ;
- une variation du déphasage φ entre les maximums de Da et de Db qui n'est plus exactement de π/2, mais qui change néanmoins de signe selon le sens de variation de l'incidence θ, la mesure du déphasage φ reste exploitable tant que l'incidence θ reste suffisamment différent de π.

Dans le cas général, les variations de l'incidence θ et de cosθ sont quelconques, la période des franges est alors variable, le déphasage φ est alors seulement voisin de +π/2.

La détermination du sens de variation de cosθ, sens en permanence opposé à celui de la variation de l'incidence θ pour e variant de 0 à π se fait par analyse de la position temporelle tb du maximum du signal produit par Db par rapport au milieu de deux maximums consécutifs ta et t'a du signal produit par Da :

- si tb > (ta+ta')/2, alors le signal de Db est en avance sur celui de Da et le déphasage φ>0 donc d(cosθ)/dt>0, donc dθ/dt<0.
- si tb < (ta+ta')/2, alors le signal de Db est en retard sur celui de Da et le déphasage φ<0 donc d(cosθ)/dt<0, donc dθ/dt>0.

Ainsi, il est toujours possible dans une plage angulaire d'au moins deux franges de déterminer le sens de variation des franges et par conséquent, le sens de variation d'orientation de l'axe mesuré.

## Systèmes de détection

Comme indiqué sur la figure 9, on référencie le dispositif fixe DF du système de détection selon l'invention dans un trièdre fixe Tf orthonormé direct et l'objet mobile OM dans un trièdre Tm (x', y', z'). L'orientation de Tm par rapport à Tf est entièrement décrite par la matrice de rotation M (3x3) qui relie les vecteurs unitaires $\vec{i'}, \vec{j'}, \vec{k'}$ des axes x', y', z' de Tm aux vecteurs unitaires $\vec{i}, \vec{j}, \vec{k}$ des axes x, y, z de Tf. On peut écrire M sous la forme clas-

$$\text{sique } M = \begin{pmatrix} a1 & b1 & c1 \\ a2 & b2 & c2 \\ a3 & b3 & c3 \end{pmatrix}. \text{ Les colonnes de cette ma-}$$

trice M sont les composantes des vecteurs unitaires de Tm dans le repère fixe Tf. L'orientation du repère mobile Tm par rapport au repère fixe Tf peut être déterminée par les orientations de deux axes v et w connues dans le repère mobile Tm.

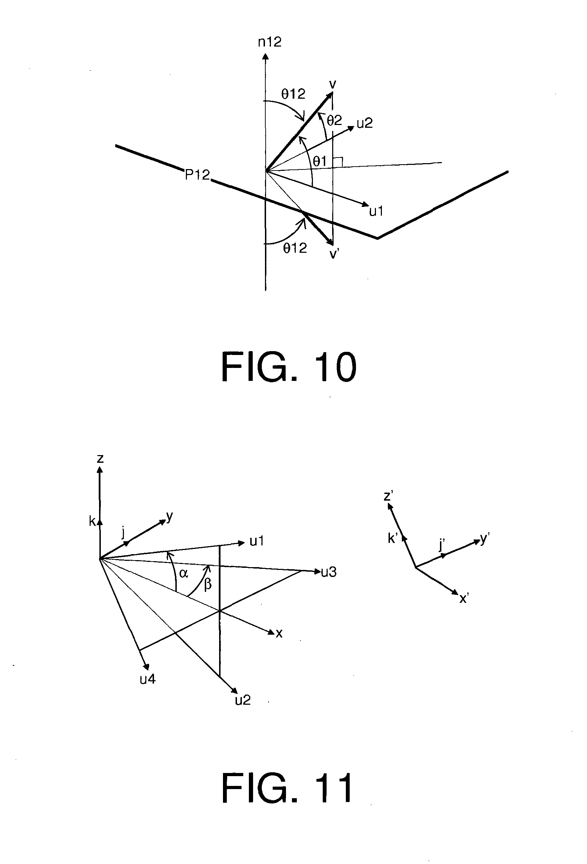

Comme on l'a vu, il est possible de déterminer au moyen du système selon l'invention l'orientation θ d'un axe par rapport à un axe d'émission ou d'éclairage u1 au moyen de la création d'un système de franges. La création de deux systèmes de franges différents permet donc de mesurer deux orientations θ1 et θ2 d'un axe mobile v. Cependant, un axe mobile v inconnu défini par ses orientations non signées θ1 et θ2, mesurées par rapport à deux axes fixes connus u1 et u2, n'est pas unique. En effet, si un axe mobile v satisfait à cette double condition, son symétrique v' par rapport au plan défini par u1 et u2, y satisfait également comme on le voit sur la figure 10.

La levée d'ambiguïté entre ces deux solutions consiste à limiter le champ angulaire d'orientations de l'axe mobile v, de façon à rejeter en permanence un des deux axes mobiles v ou v' hors du domaine angulaire des solutions. L'axe mobile v est contraint de rester dans le même demi-espace délimité par le plan P12 défini par les deux axes u1 et u2 comme on le voit sur la figure 10.

Cette condition est vérifiée lorsque l'orientation θ12 de v par rapport à la normale à n12 au plan P12 contenant u1 et u2 reste dans le domaine [0, π/2], soit encore v.$(\vec{u1} \wedge \vec{u2}) > 0$, ∧ étant le symbole du produit vectoriel.

Le vecteur unitaire inconnu est noté $\vec{v} = \begin{pmatrix} x \\ y \\ z \end{pmatrix}$.

Les vecteurs unitaires des deux axes fixes connus sont notés : $\vec{u}1 = \begin{pmatrix} A1 \\ B1 \\ C1 \end{pmatrix}$ et $\vec{u}2 = \begin{pmatrix} A2 \\ B2 \\ C2 \end{pmatrix}$. Les angles mesurés θ1 et θ2 satisfont aux équations : $v.\vec{u1} = \cos(\theta1)$ et $v.\vec{u2} = \cos(\theta2)$. Les trois inconnues x, y et z satisfont donc à :

- x.A1 + y.B1 + z.C1 = $\cos\theta1$
- x.A2 + y.B2 + z.C2 = $\cos\theta2$
- $x^2+y^2+z^2=1$

Les deux premières équations fournissent les expressions séparées de x et de y sous forme de fonctions linéaires de z. En remplaçant dans la troisième équation les valeurs de x et de y par ces expressions, on obtient une équation du second degré en z.

On montre facilement que les deux axes mobiles v et v' correspondant aux deux racines z et z' de cette équation sont liés par : $v.(\vec{u1} \wedge \vec{u2}) = - v'(\vec{u1} \wedge \vec{u2})$

On ne conserve donc que la racine qui satisfait à : $v.(\vec{u1} \wedge \vec{u2}) > 0$. Comme on vient de le voir, l'orientation de l'axe mobile v est mesurée par rapport à deux axes fixes d'éclairage u1 et u2. L'orientation d'un second axe mobile w permettant de déterminer totalement l'orientation d'un objet mobile est mesurée par rapport à deux axes fixes d'éclairage différents u3 et u4.

On cherche à obtenir un débattement angulaire maximum du casque de $\pi/2$ par rapport à son orientation « moyenne » tout en respectant les conditions : $v.(\vec{u1} \wedge \vec{u2}) > 0$ et $w.(\vec{u3} \wedge \vec{u4}) > 0$. Les axes fixes sont donc choisis de telle façon que le plan (u1, u2) soit perpendiculaire à la direction moyenne de l'axe mobile v et que le plan (u3, u4) soit perpendiculaire à la direction moyenne de l'axe mobile w. La direction moyenne est celle à partir de laquelle le débattement angulaire maximum est souhaité.

De façon privilégiée, il est intéressant d'adopter la configuration suivante :

- Orientation moyenne du repère mobile parallèle à celle du repère fixe ;
- Axes mobiles v et w perpendiculaires entre eux ;
- Axes mobiles v et w confondus avec les deux axes y' et z' du repère mobile.

Il en découle les particularités suivantes indiquées sur la figure 11:

- Les axes fixes u1 et u2 sont dans le plan (zOx), par exemple pivotés des angles $\alpha$ et -$\alpha$ par rapport à l'axe x ;
- Les axes u3 et u4 sont dans le plan (yOx), par exemple pivotés des angles $\beta$ et de -$\beta$ par rapport à l'axe x ;
- La condition de levée d'indétermination de l'axe mobile y' est : $\vec{j'}.\vec{j} > 0$, soit : b2 >0 C'est-à-dire y' en permanence dans le demi-espace à gauche du plan vertical zox ;
- La condition de levée d'indétermination de l'axe mobile z' est : $\vec{k'}.\vec{k} >0$, soit : c3 >0 C'est-à-dire l'axe z' en permanence dans le demi-espace au dessus du plan horizontal yox.

Il est possible de construire un système de détection dont l'architecture optique respecte les considérations géométriques précédentes, simplifiant ainsi la mesure et permettant de la réaliser sans ambigüités.

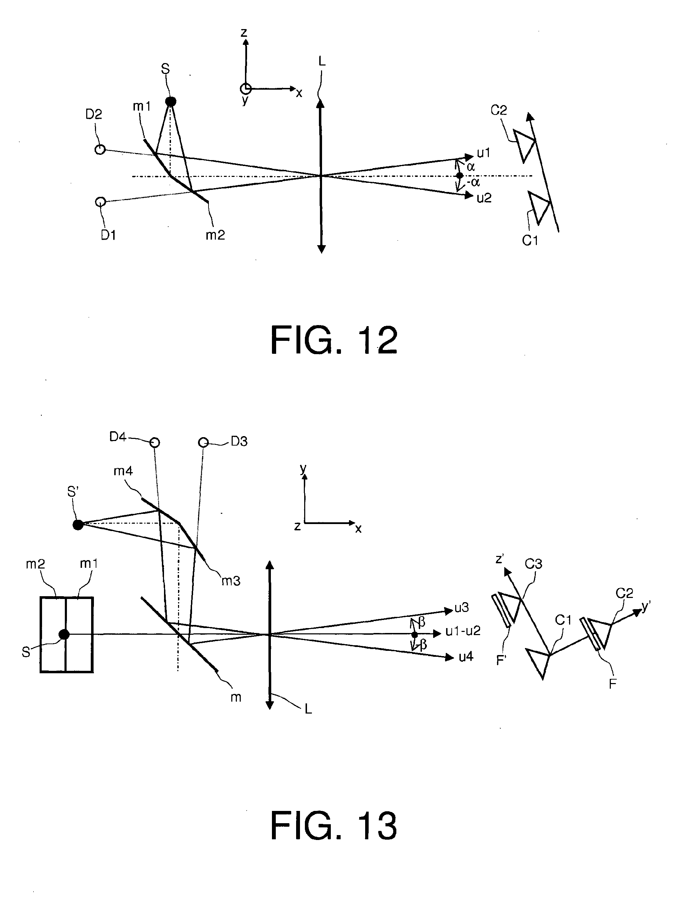

A titre de premier exemple non limitatif, la figure 12 représente le synoptique d'un système selon l'invention permettant de mesurer la variation angulaire d'un premier axe mobile selon deux directions d'orientation. Pour des raisons de clarté, le dispositif optique de levée d'ambiguïté de sens de variation d'orientation du segment C1 C2 par rapport aux axes u1 et u2 n'est pas représenté sur cette figure. Il comporte essentiellement une lame biréfringente, un polariseur linéaire, des prismes séparateurs de polarisation et de dédoublement de chaque détecteur et quatre détecteurs, deux par voie de mesure. L'implantation opto-mécanique de ce dispositif ne pose pas de problèmes particuliers.

L'objet mobile, qui est par exemple un casque, comporte deux réflecteurs C1 et C2. Ils sont éclairés à partir de la même source S, par deux faisceaux collimatés, selon deux directions différentes u1 et u2 respectivement décalées des angles $\alpha$ et -$\alpha$ et par rapport à l'axe x au moyen

- d'une lentille de collimation L d'axe optique x,
- d'un dispositif dit de « double miroir de Fresnel » constitué de deux miroirs plans m1 et m2 pivotés autour d'un axe y perpendiculaire à l'axe x, des angles $\alpha/2$ et -$\alpha/2$ par rapport à l'axe x. Les miroirs m1 et m2 sont donc décalés entre eux de l'angle $\alpha$. Ils sont semi-réfléchissants de façon à être utilisés à l'émission et à la réception.

Les interférences produites par les réflecteurs C1 et C2 selon la direction u1 sont mesurées par le détecteur D1, symétrique de S par rapport à m1 et les interférences produites par les réflecteurs C1 et C2 selon la direction u2 sont mesurées par le détecteur D2, symétrique de S par rapport à m2, comme on le voit sur la figure 12. Bien entendu, il est possible de remplacer le dispositif dit de « double miroir de Fresnel » par d'autres dispositifs permettant de réaliser la même fonction, c'est-à-dire la création de deux images d'une même source d'émission.

A titre de second exemple non limitatif, la figure 13 représente le synoptique d'un système selon l'invention permettant de mesurer la variation angulaire de deux axes mobiles par rapport à deux directions d'orientation. Par ce second système, on peut repérer l'orientation d'un objet mobile dans l'espace.

Un troisième réflecteur C3 est ajouté sur le casque et une deuxième source S' fixe est ajoutée comme on le voit sur la figure 13. Par simplification, le coin de cube C3 est disposé de façon que C1 C3 soit perpendiculaire à C1C2. On note b/2 la distance séparant les sommets des coins de cube C1 et C3. Le segment joignant les sommets des coins de cube C1 et C2 réalise le premier axe mobile y' et le segment joignant les sommets des coins de cube C1 et C3 réalise le second axe mobile z'.

La première source émet à la longueur d'onde λ. La deuxième source S' émet à une longueur d'onde λ' différente de λ. Les deux sources sont collimatées par la lentille L à l'aide du miroir m semi-transparent ou sélectif en longueur d'onde. La source S est combinée aux détecteurs D1 et D2 par les miroirs semi-transparents m1 et m2 et la source S' est combinée aux détecteurs D3 et D4 par les miroirs semi-transparents m3 et m4.

Les miroirs m3 et m4 sont pivotés respectivement des angles β et -β par rapport à l'axe y autour de l'axe z perpendiculaire à l'axe y.

Il est, bien entendu, fondamental que les détecteurs D1 et D2 captent uniquement les signaux issus des coins de cube C1 et C2 et que les détecteurs D3 et D4 captent les signaux issus des coins de cube C1 et C3 de façon que les signaux soient représentatifs d'un seul axe. Une façon simple de réaliser cette discrimination est d'utiliser des sources émettant dans des bandes spectrales différentes λ, et λ' et de disposer devant les coins de cube C2 et C3 des filtres spectraux F et F' ne transmettant qu'une seule des deux bandes spectrales.

Les détecteurs D1, D2, D3 et D4 fournissent, par comptage/décomptage, les nombres n1, n2, n3 et n4 de surbrillances ou de sous-brillances pour chacune des quatre figures d'interférences réalisées respectivement par :

- La source S émettant à la longueur d'onde λ et éclairant les réflecteurs C1 et C2 selon la direction de l'axe u1 ;
- La source S émettant à la longueur d'onde λ et éclairant les réflecteurs C1 et C2 selon la direction de l'axe u2 ;
- La source S' émettant à la longueur d'onde λ' et éclairant les réflecteurs C1 et C3 selon la direction de l'axe u3 ;
- La source S' émettant à la longueur d'onde λ' et éclairant les réflecteurs C1 et C3 selon la direction de l'axe u4.

Comme sur la figure 12, ne sont pas représentés sur la figure 13 les dispositifs de levée d'ambiguïté du sens de variation d'orientation du segment joignant C1 et C2 par rapport aux axes u1 et u2 et celle du segment joignant C1 et C3 par rapport aux axes u3 et u4.

L'orientation initiale Tm0 (O, x'0, y'0, z'0) du trièdre mobile Tm par rapport au repère fixe connu Tf (x, y, z) est supposée connue. Elle est donnée par la matrice de rotation M0:

$$M0 = \begin{pmatrix} a10 & b10 & c10 \\ a20 & b20 & c20 \\ a30 & b30 & c30 \end{pmatrix}$$

L'orientation finale du trièdre mobile Tm (O, x', y', z') par rapport au repère fixe Tf (x, y, z) est inconnue.

Elle est exprimée par la matrice de rotation M recherchée :

$$M = \begin{pmatrix} a1 & b1 & c1 \\ a2 & b2 & c2 \\ a3 & b3 & c3 \end{pmatrix}$$

Entre ces deux orientations Tm0 et Tm, les quatre détecteurs D1, D2, D3, D4 ont compté et décompté respectivement n1, n2, n3 et n4 maximums de luminance aux longueurs d'onde λ et λ' correspondant à ces changements d'orientation.

Les composantes des vecteurs unitaires des axes fixes d'éclairage par S à la longueur d'onde λ sont :

$$\vec{u}1 = \begin{pmatrix} \cos\alpha \\ 0 \\ \sin\alpha \end{pmatrix} \text{ et } \vec{u}2 = \begin{pmatrix} \cos\alpha \\ 0 \\ -\sin\alpha \end{pmatrix}$$

avec $0 < \alpha < \pi/2$

L'orientation de l'axe mobile y' de vecteur unitaire $\vec{j}'$ est donnée par :

- $\theta1 = $ angle $(\vec{u}1, \vec{j}')$, soit : $\cos\theta1 = \vec{u}1.\vec{j}'$
- $\theta2 = $ angle $(\vec{u}_2, \vec{j}')$, soit : $\cos\theta2 = \vec{u}2.\vec{j}'$

Les orientations sont donc passées respectivement de θ10 à θ1 et de θ20 à θ2. On a les relations simples qui découlent du principe même de la mesure :

- $\cos\theta1 - \cos\theta10 = n1.\lambda/a$
- $\cos\theta2 - \cos\theta20 = n2.\lambda/a$ a/2 étant la distance séparant les sommets des coins de cube C1 et C2.

On démontre que les composantes b1 et b3 vérifient les équations suivantes :

- $b1 = b10 + [(n1 + n2)\lambda/2a.\cos\alpha]$
- $b3 = b30 + [(n1 - n2)\lambda/2a.\sin\alpha]$

La composante b2 est donnée par l'équation: $b1^2 + b2^2 + b3^2 = 1$ soit :

- $b2 = (1 - b1^2 - b3^2)^{0,5}$

La deuxième racine de l'équation, soit $b2 = -(1 - b1^2 - b3^2)^{0,5}$, étant négative, sort donc du domaine de validité défini par b2 positif.

Le calcul est semblable au précédent pour les composantes c1, c2 et c3 de la troisième colonne de la matrice M.

Les composantes des deux vecteurs unitaires des axes fixes d'éclairage par S' à la longueur d'onde λ' sont :

$$\vec{u}3 = \begin{pmatrix} \cos\beta \\ \sin\beta \\ 0 \end{pmatrix} \text{ et } \vec{u}4 = \begin{pmatrix} \cos\beta \\ -\sin\beta \\ 0 \end{pmatrix},$$

avec $0 < \beta < \pi/2$

L'orientation de l'axe mobile z' de vecteur unitaire $\vec{k}$' est donnée par :

- $\theta 3$ = angle $(\vec{u}_3, \vec{k}')$, soit : $\cos\theta 3 = \vec{u}3. \vec{k}'$
- $\theta 4$= angle $(\vec{u}_4, \vec{k}')$, soit : $\cos\theta 4 = \vec{u}4.\vec{k}'$

On aboutit comme précédemment à :

- c1 = c10 + [(n3+n4)$\lambda$' / 2b.cos$\beta$]
- c2 = c20 + [(n3-n4)$\lambda$' / 2b.sin$\beta$], b/2 étant la distance séparant les sommets des coins de cube C1 et C3

La composante c3 est donnée par c3= (1 - c1$^2$ -c2$^2$)$^{0,5}$

La deuxième racine c3= - (1 - c1$^2$ - c2$^2$)$^{0,5}$, étant négative, sort donc du domaine de validité défini par c3 positif.

Les composantes du vecteur $\vec{i}$' sont les coefficients a1, a2, a3 de la première colonne de la matrice M

Ils sont donnés par : $\vec{i}$'= $\vec{j}$'$\wedge\vec{k}$' (produit vectoriel), soit :

- a1 = b2.c3 - b3.c2
- a2 = b3.c1-b1.c3
- a3 = b1.c2 - b2.c1

Par conséquent, à partir des coefficients connus de la matrice M0 d'orientation initiale du casque, des orientations du dispositif rayonnant u1, u2, u3, u4 connues par construction et des quatre mesures de comptage de franges n1, n2, n3, et n4, on détermine les neuf coefficients de la matrice M qui donnent dans le repère fixe Tf l'orientation du repère mobile Tm fixé sur le casque.

**Initialisation**

Comme on l'a vu, le système selon l'invention utilisé seul permet de faire des mesures relatives d'orientation à partir d'une orientation d'origine connue. Pour réaliser des mesures absolues, il faut disposer d'un dispositif d'initialisation permettant de repérer précisément une orientation initiale de l'objet mobile. Diverses dispositions sont possibles. Cependant, il peut être avantageux d'utiliser en partie les moyens optiques déjà mis en place pour la mesure de variation d'orientation.

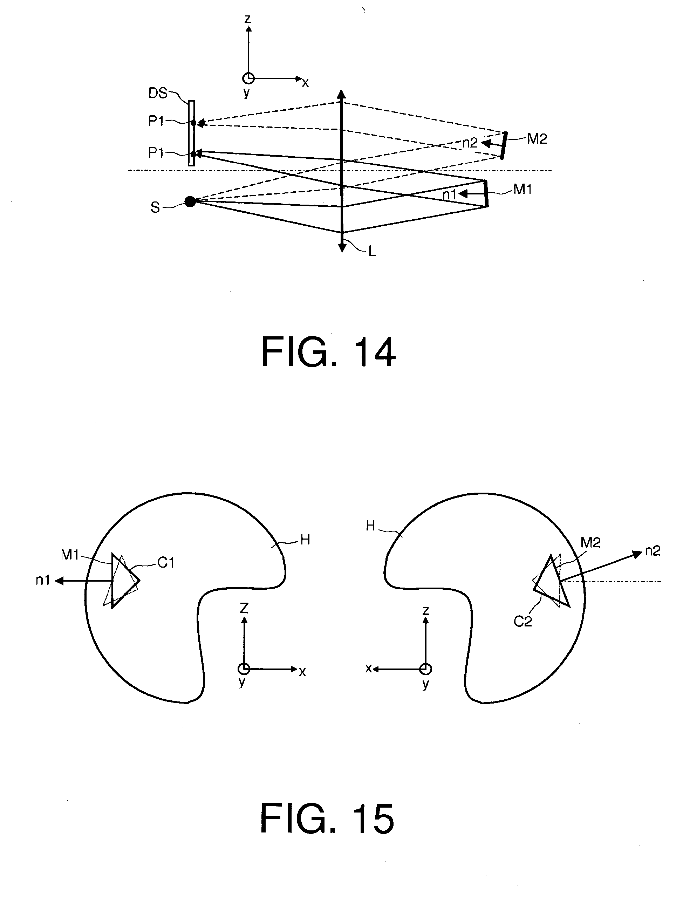

Un tel dispositif optique pour mesurer précisément une orientation initiale du casque est décrit sur les figures 14 à 18.

La figure 14 représente une vue de côté d'un tel dispositif. Deux miroirs M1 et M2 fixés sur le casque, par exemple les faces d'entrée de deux des trois coins de cube C1 et C2, ont des orientations différentes connues et proches l'une de l'autre. A titre d'exemple, la figure 15 représente une implantation possible des deux coins de cube C1 et C2 et des deux miroirs M1 et M2 sur un casque H. La figure 15 comporte à droite une vue de côté d'un casque et à gauche la même vue du côté opposé. Sur cette figure 15, on a représenté les normales n1 et n2 aux faces d'entrée M1 et M2 et leur différence d'inclinaison.

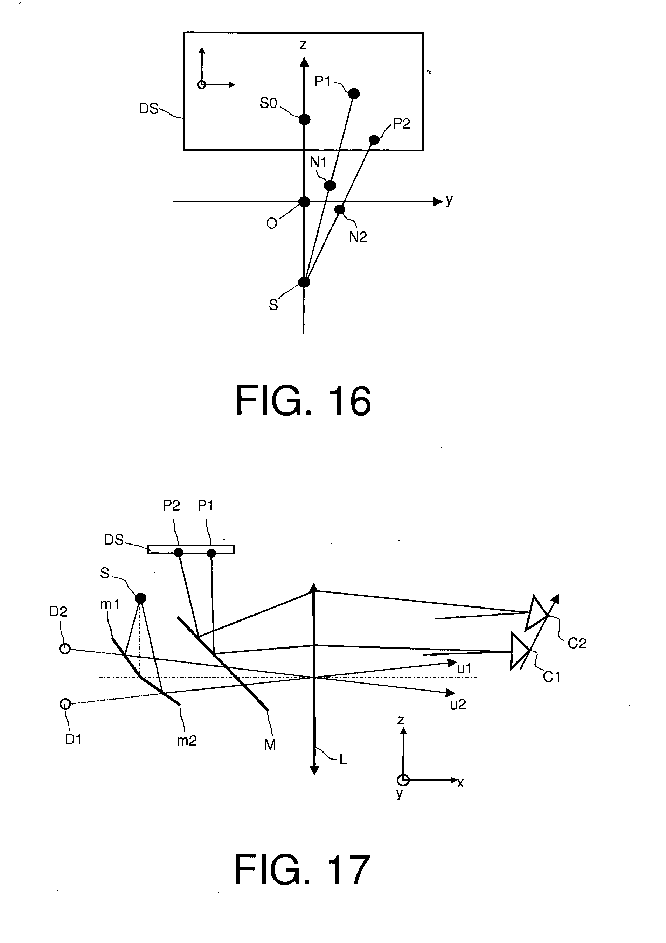

Le flux collimaté produit par une source S cohérente ou non est réfléchi séparément par ces deux miroirs M1 et M2. La direction de chacun des deux flux réfléchis est mesurée par les positions P1 et P2 de chaque reflet sur un détecteur surfacique DS placé sur le plan focal du collimateur L. La figure 16 représente dans un plan perpendiculaire à celui de la figure 14 les impacts des positions P1 et P2 et la position de la source S. Les quatre coordonnées des positions P1 et P2 ainsi recueillies permettent de calculer à tout moment les trois paramètres d'orientation du casque, dans un champ angulaire réduit, autour d'une orientation donnée.

Le détecteur surfacique de position DS est avantageusement un détecteur matriciel de type CCD. Si N est le nombre de points de résolution sur chaque axe, la précision angulaire est égale au ratio du champ angulaire par ce nombre N. Ainsi, pour N égal à 1000 points et pour un champ angulaire égal à 1 degré, on obtient une précision angulaire d'environ 1 millième de degré ou 17 microradians.

Un des intérêts de ce dispositif est qu'il peut s'intégrer en partie au système selon l'invention. Un premier exemple d'association avec un système de détection d'orientation est représenté en figure 17. Le système de détection est celui de la figure 12. Il permet la détection d'orientation selon un axe particulier. On peut de la même façon intégrer le dispositif de mesure d'orientation initiale à un système de détection deux-axes.

La source S éclaire les coins de cube sous double incidence selon les directions u1 et u2. M est un miroir semi-réfléchissant séparant les flux, qui, issus de la réflexion par les coins ce cube C1 et C2, interfèrent en D1 et D2, des flux provenant de la réflexion sur les faces avant des mêmes coins de cube.

Bien entendu, l'alignement peut aussi être réalisé à l'aide d'une autre source, éventuellement incohérente, que l'on peut, en outre, allumer uniquement lors de l'alignement.

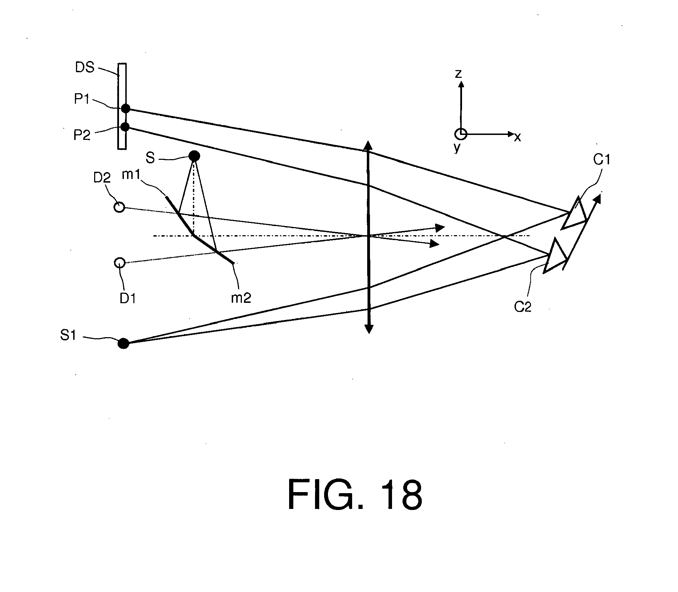

Un second exemple d'association est représenté en figure 18. Cette configuration évite cette fois l'ajout du miroir M semi-réfléchissant. Elle consiste à l'aide d'une deuxième source S1, à utiliser la périphérie du champ du collimateur pour éclairer et pour recevoir le flux réfléchi. Les incidences sur les faces avant des coins de cube en sont augmentées.

**Avantages du système**

Par rapport aux systèmes optiques de l'art antérieur et dans le cadre d'une utilisation en tant que système de détection de posture de casque, le système selon l'invention présente les avantages suivants :

- Grande simplicité de réalisation due à la mise en oeuvre de sources lumineuses sans spécificités particulières, d'optiques simples et de détecteurs photosensibles ponctuels ;
- Grande simplicité des calculs nécessaires à la détermination de l'orientation la position du casque ;
- Grande résolution de l'ordre de grandeur de 10 μrad et une grande précision de mesure, bien supérieures aux performances des systèmes actuels ;
- Absence de modifications lourdes sur le casque due à l'utilisation de dispositifs optiques entièrement passifs ajoutés sur le casque ;
- Grande immunité à l'éclairement solaire due à l'utilisation de coins de cube réfléchissants.

**Revendications**

1. Système de détection d'au moins un angle de rotation d'un casque de pilote (H) dans l'espace comprenant au moins :

    - un dispositif fixe électro-optique de position et d'orientation connue comprenant :

        ○ une première source d'émission (S) ponctuelle collimatée par un objectif optique (L) ;
        ○ un élément optique semi-réfléchissant (m) et ;
        ○ un premier ensemble de détection photosensible (D), la première source d'émission (S) et le premier ensemble de détection (D) étant symétriques par rapport à l'élément optique semi-réfléchissant (m) ;

    - un ensemble comprenant deux dispositifs rétroréfléchissants (C1, C2) appelés « coin de cube » disposés sur le casque de pilote (H) ;

    **caractérisé en ce que** :

        - la première source ponctuelle (S) est une source de lumière cohérente émettant à une première longueur d'onde ;
        - les deux coins de cube (C1, C2) forment un interféromètre, c'est-à-dire qu'une première partie de la lumière issue de la source collimatée (S), rétro-réfléchie par le premier coin de cube (C1) et focalisée par l'objectif optique (L) interfère sur le premier ensemble de détection photosensible (D) avec une seconde partie de la lumière issue de la source collimatée (S), rétro-réfléchie par le second coin de cube (C2) et focalisée par l'objectif optique (L), le signal reçu par le premier ensemble de détection photosensible (D) dépendant de l'orientation de l'axe joignant les deux centres des deux coins de cube ;
- le système étant configuré pour déterminer ledit angle de rotation au moyen dudit signal d'interférence.

2. Système de détection selon la revendication 1, **caractérisé en ce que** le système comprend :

    - des premiers moyens optiques (m1, m2) de dédoublement d'images disposés de façon à créer à travers l'élément optique semi-réfléchissant une première image et une seconde image de la première source d'émission ponctuelle et ;
    - un second ensemble de détection (D2),

    l'agencement des différents éléments optiques étant tel que la première image de la première source se forme sur le premier ensemble de détection photosensible et la seconde image de la première source se forme sur le second ensemble de détection photosensible, permettant ainsi de déterminer les variations d'orientation par rapport à deux axes connus de l'axe joignant les centres du premier coin de cube et du second coin de cube par la mesure des deux signaux issus des deux ensembles de détection

3. Système de détection selon la revendication 2, **caractérisé en ce que** le système comprend :

    - Un troisième coin de cube (C3) disposé sur l'objet mobile ;
    - une seconde source (S') d'émission ponctuelle cohérente émettant à une seconde longueur d'onde différente de la première longueur d'onde ;
    - des seconds moyens optiques (m3, m4) de dédoublement d'images disposés de façon à créer à travers l'élément optique semi-réfléchissant une première image et une deuxième image de la seconde source d'émission ponctuelle et ;
    - un troisième ensemble de détection photosensible (D3) et un quatrième ensemble de détection photosensible (D4) ponctuel,

    l'agencement des différents éléments optiques étant tel que la première image de la seconde source se forme sur le troisième ensemble de détection photosensible et la deuxième image de la seconde source se forme sur le quatrième ensemble de détection photosensible, permettant ainsi de déterminer :

- les variations d'orientation par rapport à deux axes connus du premier axe joignant les centres du premier coin de cube (C1) et du second coin de cube (C2) par la mesure des deux signaux issus des deux premiers détecteurs (D1, D2) et ;
- les variations d'orientation par rapport à deux axes connus du second axe joignant les centres du premier coin de cube (C1) et du troisième coin de cube (C3) par la mesure des deux signaux issus du troisième et du quatrième détecteur (D3, D4).

4. Système de détection selon l'une des revendications 2 ou 3, **caractérisé en ce que** les moyens optiques de dédoublement d'images sont constitués de deux lames planes semi-réfléchissantes (m1, m2 et m3, m4) ayant un côté commun et dont les normales font un angle prédéterminé différent de zéro.

5. Système de détection selon l'une des revendications précédentes, **caractérisé en ce qu'**au moins un des ensembles de détection photosensible (D1, D2, D3, D4) comporte un unique détecteur ponctuel.

6. Système de détection selon l'une des revendications précédentes, **caractérisé en ce qu'**au moins un des ensembles de détection photosensible comporte deux détecteurs ponctuels (Da, Db) séparés par un élément optique séparateur de polarisation (Pbs), au moins un des coins de cube comportant un polariseur linéaire(P), le dispositif fixe ou ledit coin de cube comprenant une lame quart d'onde (B), permettant ainsi de déterminer le sens de variation de l'orientation de l'axe joignant les centres du premier coin de cube et du second coin de cube par la mesure des deux signaux issus des deux détecteurs ponctuels.

7. Système de détection selon l'une des revendications précédentes, **caractérisé en ce que** le système de détection comporte des moyens mécaniques ou opto-mécaniques permettant d'orienter les faisceaux collimatés émis par la ou les sources ponctuelles (S, S') d'un angle prédéterminé.

8. Système de détection selon l'une des revendications précédentes, **caractérisé en ce que** :

le système de détection comporte des moyens optiques permettant de déterminer une orientation initiale des coins de cube, lesdits moyens comportant au moins une source de lumière collimatée dite source d'initialisation et une matrice de photodétection (DS) ;
le casque de pilote comportant deux miroirs plans (M1, M2) disposés dans des plans différents et de position connue par rapport au casque de pilote.

9. Système de détection selon la revendication 1, **caractérisé en ce que** la source d'initialisation est la première source d'émission ponctuelle collimatée et **en ce que** les miroirs plans (M1, M2) sont deux faces d'entrée des coins de cube (C1, C2).

**Patentansprüche**

1. System zum Erkennen von wenigstens einem Drehwinkel eines Pilotenhelms (H) im Raum, das wenigstens Folgendes umfasst:

- eine feste elektrooptische Vorrichtung mit bekannter Position und Orientierung, die Folgendes umfasst:

• eine erste punktförmige Emissionsquelle (S), die von einem optischen Objektiv (L) kollimiert wird;
• ein halbreflektierendes optisches Element (m) und
• eine erste fotosensible Erkennungsbaugruppe (D), wobei die erste Emissionsquelle (S) und die erste Erkennungsbaugruppe (D) in Bezug auf das halbreflektierende optische Element (m) symmetrisch sind;

- eine Baugruppe, die zwei auf dem Pilotenhelm (H) angeordnete, "Würfelecke" genannte zurückreflektierende Vorrichtungen (C1, C2) umfasst;
**dadurch gekennzeichnet, dass**:
- die erste punktförmige Quelle (S) eine kohärente Lichtquelle ist, die mit einer ersten Wellenlänge emittiert;
- die beiden Würfelecken (C1, C2) ein Interferometer bilden, d.h. dass ein erster Teil des von der kollimierten Quelle (S) kommenden Lichts, von der ersten Würfelecke (C1) zurückreflektiert und von dem optischen Objektiv (L) fokussiert, sich auf der ersten fotosensiblen Detektionsbaugruppe (D) mit einem zweiten Teil des von der kollimierten Quelle (S) kommenden Lichts überlagert, von der zweiten Würfelecke (C2) zurückreflektiert und von dem optischen Objektiv (L) fokussiert, wobei das von der ersten fotosensiblen Erkennungsbaugruppe (D) empfangene Signal von der Orientierung der die beiden Mittelpunkte der beiden Würfelecken verbindenden Achse abhängig ist;
- wobei das System zum Ermitteln des Drehwinkels mittels des Interferenzsignals konfiguriert ist.

2. Erkennungssystem nach Anspruch 1, **dadurch gekennzeichnet, dass** das System Folgendes umfasst:

- erste optische Mittel (m1, m2) zum Spalten von Bildern, die so angeordnet sind, dass durch das halbreflektierende optische Element ein erstes Bild und ein zweites Bild der ersten punktförmigen Emissionsquelle entstehen; und
- eine zweite Erkennungsbaugruppe (D2), wobei die Anordnung der verschiedenen optischen Elemente derart ist, dass das erste Bild der ersten Quelle auf der ersten fotosensiblen Erkennungsbaugruppe entsteht und das zweite Bild der ersten Quelle auf der zweiten fotosensiblen Erkennungsbaugruppe entsteht, die auch die Ermittlung der Orientierungsvariationen der Achse, die die Mittelpunkte der ersten Würfelecke und der zweiten Würfelecke verbindet, durch Messen der beiden von den beiden Erkennungsbaugruppen kommenden Signale in Bezug auf zwei bekannte Achsen zulässt.

3.  Erkennungssystem nach Anspruch 2, **dadurch gekennzeichnet, dass** das System Folgendes umfasst:

    - eine auf dem beweglichen Objekt angeordnete dritte Würfelecke (C3);
    - eine zweite kohärente punktförmige Emissionsquelle (S'), die mit einer zweiten Wellenlänge emittiert, die sich von der ersten Wellenlänge unterscheidet;
    - zweite optische Mittel (m3, m4) zum Spalten von Bildern, die so angeordnet sind, dass durch das halbreflektierende optische Element ein erstes Bild und ein zweites Bild der zweiten punktförmigen Emissionsquelle entsteht; und
    - eine dritte fotosensible Erkennungsbaugruppe (D3) und eine vierte punktförmige fotosensible Erkennungsbaugruppe (D4),

    wobei die Anordnung der verschiedenen optischen Elemente derart ist, dass das erste Bild der zweiten Quelle auf der dritten fotosensiblen Erkennungsbaugruppe entsteht und das zweite Bild der zweiten Quelle auf der vierten fotosensiblen Erkennungsbaugruppe entsteht, so dass Folgendes ermittelt werden kann:

    - die Orientierungsvariationen der ersten Achse, die die Mittelpunkte der ersten Würfelecke (C1) und der zweiten Würfelecke (C2) verbindet, in Bezug auf zwei bekannte Achsen durch Messen der beiden von den beiden ersten Detektoren (D1, D2) kommenden Signale; und
    - die Orientierungsvariationen der zweiten Achse, die die Mittelpunkte der ersten Würfelquelle (C1) und der dritten Würfelecke (C3) verbindet, in Bezug auf die beiden bekannten Achsen anhand der Messung der beiden vom dritten und vierten Detektor (D3, D4) kommenden Signale.

4.  Erkennungssystem nach Anspruch 2 oder 3, **dadurch gekennzeichnet, dass** die optischen Mittel zum Spalten von Bildern von zwei ebenen halbreflektierenden Platten (m1, m2 und m3, m4) gebildet werden, jeweils mit einer gemeinsamen Seite, deren Normale einen vorbestimmten Winkel von ungleich null bilden.

5.  Erkennungssystem nach einem der vorherigen Ansprüche, **dadurch gekennzeichnet, dass** wenigstens eine der fotosensiblen Erkennungsbaugruppen (D1, D2, D3, D4) einen einzigen punktförmigen Detektor umfasst.

6.  Erkennungssystem nach einem der vorherigen Ansprüche, **dadurch gekennzeichnet, dass** wenigstens eine der fotosensiblen Erkennungsbaugruppen zwei durch ein optisches Polarisationstrennelement (Pbs) getrennte punktförmige Detektoren (Da, Db) umfasst, wobei wenigstens eine der Würfelecken einen linearen Polarisator (P) umfasst, wobei die feste Vorrichtung oder die Würfelecke, die eine Viertelwellenplatte (B) umfasst, auch die Ermittlung der Variationsrichtung der Orientierung der Achse, die die Mittelpunkte der ersten Würfelecke und der zweiten Würfelecke verbindet, anhand der Messung der beiden von zwei punktförmigen Detektoren kommenden Signale zulässt.

7.  Erkennungssystem nach einem der vorherigen Ansprüche, **dadurch gekennzeichnet, dass** das Erkennungssystem mechanische oder optomechanische Mittel umfasst, die eine Orientierung der von der oder den punktförmigen Quellen (S, S') emittierten kollimierten Strahlen durch einen vorbestimmten Winkel zulassen.

8.  Erkennungssystem nach einem der vorherigen Ansprüche, **dadurch gekennzeichnet, dass**:

    das Erkennungssystem optische Mittel umfasst, die die Ermittlung einer Anfangsorientierung der Würfelecken zulassen, wobei die Mittel wenigstens eine kollimierte Lichtquelle, Initialisierungsquelle genannt, und eine Fotodetektionsmatrix (DS) umfassen;
    wobei der Pilotenhelm zwei Planspiegel (M1, M2) umfasst, die in verschiedenen Ebenen und in einer bekannten Position in Bezug auf den Pilotenhelm angeordnet sind.

9.  Erkennungssystem nach Anspruch 1, **dadurch gekennzeichnet, dass** die Initialisierungsquelle die erste kollimierte punktförmige Emissionsquelle ist, und dadurch, dass die Planspiegel (M1, M2) zwei Eingangsflächen von Würfelecken (C1, C2) sind.

## Claims

1. System for detecting at least one angle of rotation of a pilot's helmet (H) in space, comprising at least:

   - a fixed electro-optical device of known position and orientation comprising:

     • a first point-like emission source (S) which is collimated by an optical objective lens (L);
     • a semi-reflective optical element (m) and;
     • a first photosensitive detection assembly (D), the first emission source (S) and the first detection assembly (D) being symmetrical relative to the semi-reflective optical element (m);

   - an assembly comprising two retro-reflective devices (C1, C2) which are referred to as a "cube corner" and which are arranged on the pilot's helmet (H);
   **characterised in that**
   - the first point-like source (S) is a coherent light source emitting at a first wavelength;
   - the two cube corners (C1, C2) form an interferometer, that is to say, a first portion of the light from the collimated source (S), which is retro-reflected by the first cube corner (C1) and focused by the optical objective lens (L), interferes on the first photosensitive detection assembly (D) with a second portion of the light from the collimated source (S), which is retro-reflected by the second cube corner (C2) and focused by the optical objective lens (L), the signal received by the first photosensitive detection assembly (D) depending on the orientation of the axis which joins the two centres of the two cube corners;
   - the system being configured in order to determine the rotation angle using the interference signal.

2. Detection system according to claim 1, **characterised in that** the system comprises:

   - first optical means (m1, m2) for dividing images which are arranged so as to produce through the semi-reflective optical element a first image and a second image of the first point-like emission source, and;
   - a second detection assembly (D2),
   the arrangement of the different optical elements being such that the first image of the first source is formed on the first photosensitive detection assembly and the second image of the first source is formed on the second photosensitive detection assembly, thus enabling the orientation variations, with respect to two known axes, of the axis which joins the centres of the first cube corner and the second cube corner to be determined by measuring the two signals from the two detection assemblies.

3. Detection system according to claim 2, **characterised in that** the system comprises:

   - a third cube corner (C3) which is arranged on the movable object;
   - a second coherent point-like emission source (S') which transmits at a second wavelength which is different from the first wavelength;
   - second optical means (m3, m4) for dividing images which are arranged so as to produce through the semi-reflective optical element a first image and a second image of the second point-like emission source, and;
   - a third photosensitive detection assembly (D3) and a fourth point-like photosensitive detection assembly (D4),

   the arrangement of the different optical elements being such that the first image of the second source is formed on the third photosensitive detection assembly and the second image of the second source is formed on the fourth photosensitive detection assembly, thus enabling the determination of:

   - the orientation variations, relative to two known axes, of the first axis which joins the centres of the first cube corner (C1) and the second cube corner (C2) by measuring the two signals from the first two detectors (D1, D2), and;
   - the orientation variations, relative to two known axes, of the second axis which joins the centres of the first cube corner (C1) and the third cube corner (C3) by measuring the two signals from the third and fourth detector (D3, D4).

4. Detection system according to claim 2 or claim 3, **characterised in that** the optical image dividing means are constituted by two planar semi-reflective plates (m1, m2 and m3, m4) which have a common side and whose normals form a predetermined angle which is not zero.

5. Detection system according to any one of the preceding claims, **characterised in that** at least one of the photosensitive detection assemblies (D1, D2, D3, D4) comprises a single point-like detector.

6. Detection system according to any one of the preceding claims, **characterised in that** at least one of the photosensitive detection assemblies comprises two point-like detectors (Da, Db) which are separated by a polarisation separation optical element (Pbs), at least one of the cube corners comprising a linear polariser (P), the fixed device or the cube corner comprising a quarter-wave plate (B), thus allowing the determination of the direction of orientation variation of the axis which joins the centres of the first cube corner and the second cube corner by measuring the two signals from the two point-like detectors.

7. Detection system according to any one of the preceding claims, **characterised in that** the detection system comprises mechanical means or opto-mechanical means which allow the collimated beams transmitted by the point-like source(s) (S, S') to be orientated at a predetermined angle.

8. Detection system according to any one of the preceding claims, **characterised in that**:

> the detection system comprises optical means which allow the determination of an initial orientation of the cube corners, the means comprising at least one collimated light source which is referred to as the initialisation source and a photodetection matrix (DS);
> the pilot's helmet comprising two planar mirrors (M1, M2) which are arranged in different planes and which have a known position relative to the pilot's helmet.

9. Detection system according to claim 1, **characterised in that** the initialisation source is the first collimated point-like emission source, and **in that** the planar mirrors (M1, M2) are two inlet faces of the cube corners (C1, C2).

# FIG. 1

# FIG. 2

# FIG. 3

# FIG. 4

# FIG. 5

FIG. 6

FIG. 7

FIG. 8

FIG. 9

## FIG. 10

## FIG. 11

FIG. 12

FIG. 13

FIG. 14

FIG. 15

# FIG. 16

# FIG. 17

# FIG. 18

**EP 2 554 939 B1**

## RÉFÉRENCES CITÉES DANS LA DESCRIPTION

**Documents brevets cités dans la description**

*   JP 2000111325 A